# EUROPÄISCHE PATENTSCHRIFT

(11) **EP 1 592 325 B1**
(45) Veröffentlichungstag und Bekanntmachung des Hinweises auf die Patenterteilung: **27.09.2006**
(21) Anmeldenummer: 04705043.0
(22) Anmeldetag: 26.01.2004
(51) Int. Cl.: A47C 20/04, F16D 55/00

(54) **DREHMOMENTREDUZIERTE BREMS-UND KUPPLUNGSANORDNUNG**
TORQUE-REDUCED BRAKE/CLUTCH SYSTEM
ENSEMBLE FREIN-EMBRAYAGE A COUPLE REDUIT

(30) Priorität: 13.02.2003 DE 20302402 U
(43) Veröffentlichungstag der Anmeldung: 09.11.2005
(73) Patentinhaber: Dewert Antriebs- und Systemtechnik GmbH, 32278 Kirchlengern (DE)
(72) Erfinder: ROITHER, Andreas, 32130 Enger (DE)
(74) Vertreter: Philipp, Matthias
(86) Internationale Anmeldenummer: PCT/DE2004/000113
(87) Internationale Veröffentlichungsnummer: WO 2004/071243

(56) Entgegenhaltungen:
- EP-A- 0 769 634
- DE-A- 19 929 759
- PATENT ABSTRACTS OF JAPAN Bd. 0110, Nr. 74 (M-568), 6. März 1987 (1987-03-06) & JP 61 229650 A (TOUYOUSHIYA:KK), 13. Oktober 1986 (1986-10-13)

## Beschreibung

Die Erfindung betrifft eine Brems- und Kupplungsanordnung nach dem Oberbegriff des Anspruchs 1.

Aus DE 199 29 759 A ist eine multifunktionelle Bettkonstruktion mit einem Hubmechanismus bekannt, dessen Aufbau dem Oberbegriff des Anspruchs 1 entspricht.

Aus EP 0 769 634 A ist eine normalerweise geschlossene Bremse bekannt, deren Aufbau im wesentlichen ebenfalls dem Oberbegriff des Anspruchs 1 entspricht.

JP 61229650 A offenbart einen Aufbau einer hydraulischen Bremse in einem Traktor mit den Merkmalen des Oberbegriffs des Anspruchs 1.

Insbesondere im Bereich von Verstellantrieben wie bspw. Möbelantrieben besteht häufig die Forderung, ein mittels eines Antriebsmotors z.B. über einen Linearantrieb verstellbares Element bedarfsweise auch bei Stillstand des Antriebsmotors von Hand bewegen zu können, sei es bei Stromausfall oder einer sonstigen Störung des Antriebsmotors oder auch lediglich zum manuellen Bewegen in einer bestimmten Richtung. Als Beispiel kann im Hospitalbereich eine Krankenbettverstellung genannt werden, bei der die Anforderung besteht, das Krankenbett unter Trennung der Antriebsverbindung zum Antriebsmotor manuell in bestimmten Richtungen bewegen zu können, z.B. eine kontrollierte Abwärtsbewegung des Betts oder eines Teils davon ausführen zu können, wofür es nicht nur erforderlich ist, die Antriebsverbindung zu trennen, sondern auch das dadurch freiwerdende Kupplungsmoment gesteuert aufnehmen zu können, um eine unkontrollierte (schnelle) Bewegung des ansonsten motorisch verstellten Elements zu verhindern.

Da das kontrolliert aufzunehmende Drehmoment unter Last an den Kupplungsstellen relativ groß ist, bestünde bei Einbau einer herkömmlichen Reibkupplung zwischen dem rotierenden Element und dem drehfesten Übertragungselement die Notwendigkeit nach relativ großen und verschleißbehafteten Bauteilen.

Die Aufgabe der Erfindung besteht darin, eine gattungsgemäße Brems- und Kupplungsanordnung anzugeben, bei der relativ große Drehmomente mit kleinen und wenig verschleißbehafteten Bauteilen sicher unterbrochen bzw. gesteuert übertragen werden können.

Diese Aufgabe wird erfindungsgemäß durch eine Brems- und Kupplungsanordnung nach Anspruch 1 gelöst.

Es kann vorgesehen sein, daß das zweite Bremselement ausschließlich formschlüssig mit dem ersten Bremselement in Eingriff bringbar ist. Bei dieser Ausführung wird lediglich die Bremswirkung des Untersetzungsgetriebes, das in diesem Fall bevorzugt als Schneckengetriebe ausgebildet ist, genutzt, wenn das zweite Bremselement nicht in Eingriff mit dem ersten Bremselement steht, bzw. bei Eingriff der Bremselemente wird eine formschlüssige, drehfeste Verbindung zwischen dem rotierenden Element und dem Übertragungselement hergestellt. In diesem Fall kann eine zahnkupplungsartige Eingriffsverbindung zwischen den Bremselementen vorgesehen sein.

Alternativ kann vorgesehen sein, daß das zweite Bremselement ausschließlich reibschlüssig mit dem ersten Bremselement in Eingriff bringbar ist.

Bevorzugt ist vorgesehen, daß das zweite Bremselement gesteuert reibschlüssig mit dem ersten Bremselement in Eingriff bringbar ist, wobei eine Anpreßkraft zwischen erstem und zweitem Bremselement steuerbar ist.

Es kann zweckmäßig sein, wenn das erste Bremselement in Form eines Bremstellers mit einer Reibfläche ausgebildet ist. Die Reibfläche kann zumindest bereichsweise konusförmig oder eben ausgebildet sein.

Bevorzugt sieht die Erfindung vor, daß das erste Bremselement drehfest mit einem Ausgang des Untersetzungsgetriebes verbunden ist, bzw. bei Ausbildung des Untersetzungsgetriebes als Schneckengetriebe, mit der Schnecke.

Bei Verwendung eines Schneckengetriebes ist bevorzugt vorgesehen, daß das zweite Bremselement in Richtung einer Drehachse der Schnecke axial verschieblich und drehfest in dem Gehäuse geführt ist.

Das zweite Bremselement kann in Form eines Bremstellers mit einer Reibfläche ausgebildet sein. Die Reibfläche kann zumindest bereichsweise konusförmig oder eben ausgebildet sein.

Die Erfindung sieht bevorzugt vor, daß das zweite Bremselement in Richtung auf das erste Bremselement federbelastet ist.

In bevorzugter Weiterbildung ist vorgesehen, daß ein Zusatzbremselement relativ zu dem zweiten Bremselement axial beweglich geführt, drehfest damit verbunden und in Richtung auf das erste Bremselement federbelastet ist. Es kann zweckmäßig sein, wenn das Zusatzbremselement schwächer federbelastet ist als das zweite Bremselement. Weiterhin kann es zweckmäßig sein, wenn das Zusatzbremselement axial begrenzt beweglich geführt ist, so daß es ab einer vorbestimmten axialen Verlagerung des zweiten Bremselements von diesem mitgenommen wird.

In einer alternativen Ausgestaltung, in der das zweite Bremselement formschlüssig mit dem ersten Bremselement in Eingriff bringbar ist, kann ein Zusatzbremselement relativ zu dem zweiten Bremselement verschieblich und in Richtung auf das erste Bremselement federbelastet geführt sein.

Mit einem derartigen Zusatzbremselement kann zunächst eine gesteuerte, begrenzte Bremswirkung erzielt werden, bevor mit dem zweiten Bremselement entweder eine reibschlüssige oder eine formschlüssige bzw. drehfeste Kupplungswirkung erzielt wird.

Zweckmäßigerweise ist vorgesehen, daß das zweite Bremselement über eine aus einem Gehäuse nach außen geführte Betätigung steuerbar ist. Bevorzugt weist hierbei das zweite Bremselement eine axiale, aus dem Gehäuse geführte Verlängerung auf, mit der ein Betätigungshebel zusammenwirkt.

Bevorzugt sieht die Erfindung vor, daß das Übertragungselement als Gabelkopf zur lösbaren Verbindung mit einem verstellbaren Gegenstand, insbesondere einem Möbelteil, ausgebildet ist.

Es kann vorgesehen sein, daß das rotierende Element als rotierend antreibbares Rohr, insbesondere ein Hubrohr eines Verstell- oder Möbelantriebs, ausgebildet ist. Hierbei kann das Hubrohr mit einer Spindelmutter verbunden sein, die auf einer drehantreibbaren Gewindespindel sitzt.

Zweckmäßigerweise ist das rotierende Element in einem mit dem Übertragungselement fest verbundenen Gehäuse gelagert, wobei das Untersetzungsgetriebe und die Bremselemente in dem Gehäuse angeordnet sind.

Weitere Vorteile und Merkmale der Erfindung ergeben sich aus der nachfolgenden Beschreibung eines Ausführungsbeispiels, wobei auf eine Zeichnung Bezug genommen ist, in der
Fig. 1 eine perspektivische Ansicht einer erfindungsgemäßen Brems- und Kupplungsanordnung zeigt,
Fig. 2 eine Seitenansicht der Brems- und Kupplungsanordnung nach Fig. 1 zeigt,
Fig. 3 eine Schnittansicht entlang Linie III-III in Fig. 2 zeigt, und
Fig. 4 eine auseinandergezogene Darstellung wesentlicher Komponenten der Brems- und Kupplungsanordnung nach Fig. 1 bis 3 zeigt.

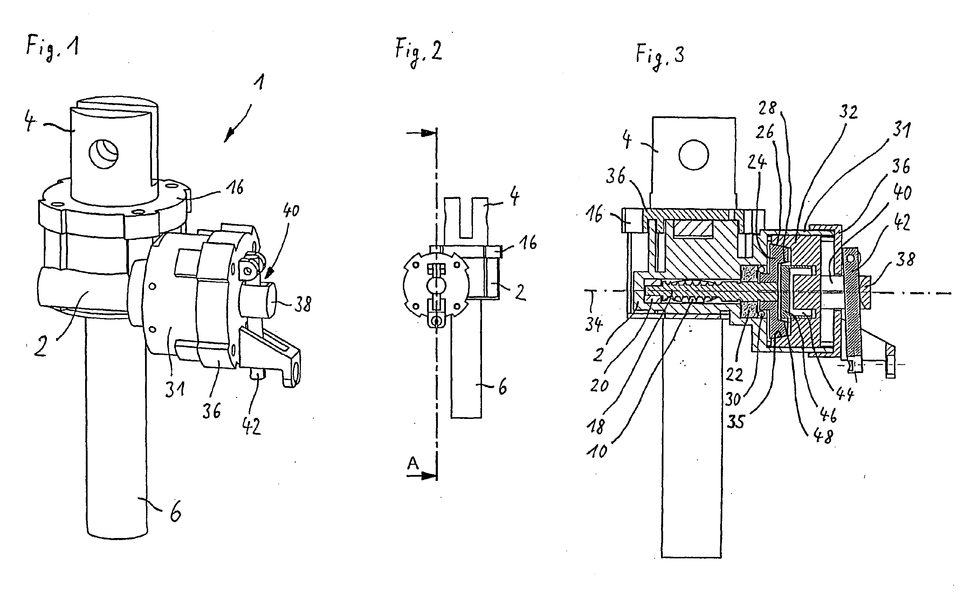

Fig. 1 und 2 zeigen in unterschiedlichen Ansichten eine erfindungsgemäße Brems- und Kupplungsanordnung 1 mit einem Gehäuse 2, welches drehfest mit einem als Übertragungselement dienenden Gabelkopf 4 verbunden ist. Der Gabelkopf 4 dient zur lösbaren Verbindung eines Verstellantriebs, dessen Betätigungsende er darstellt, mit einem nicht dargestellten, zu bewegenden Teil, bspw. einem Möbelteil.

Ein Hubrohr 6 ist in noch zu erläuternder Weise über die Brems- und Kupplungsanordnung wahlweise drehfest oder bremsmomentbehaftet mit dem Gabelkopf 4 verbindbar, wobei das Hubrohr 6 bspw. mit einer nicht dargestellten Spindelmutter verbunden sein kann, die auf einer drehantreibbaren Gewindespindel des Verstellantriebs sitzt. Auf diese Weise kann, wenn das Hubrohr drehfest mit dem Gabelkopf verbunden ist, bei Antrieb der Gewindespindel eine Linearbewegung von Hubrohr und Gabelkopf erreicht werden, während dann, wenn das Hubrohr in lediglich bremsmomentbehaftete Verbindung mit dem Gabelkopf 4 gebracht wird, eine gebremste Drehung des Hubrohrs möglich ist, so daß der Gabelkopf eine kontrollierte Linearbewegung auch bei Stillstand der Gewindespindel ausführen kann.

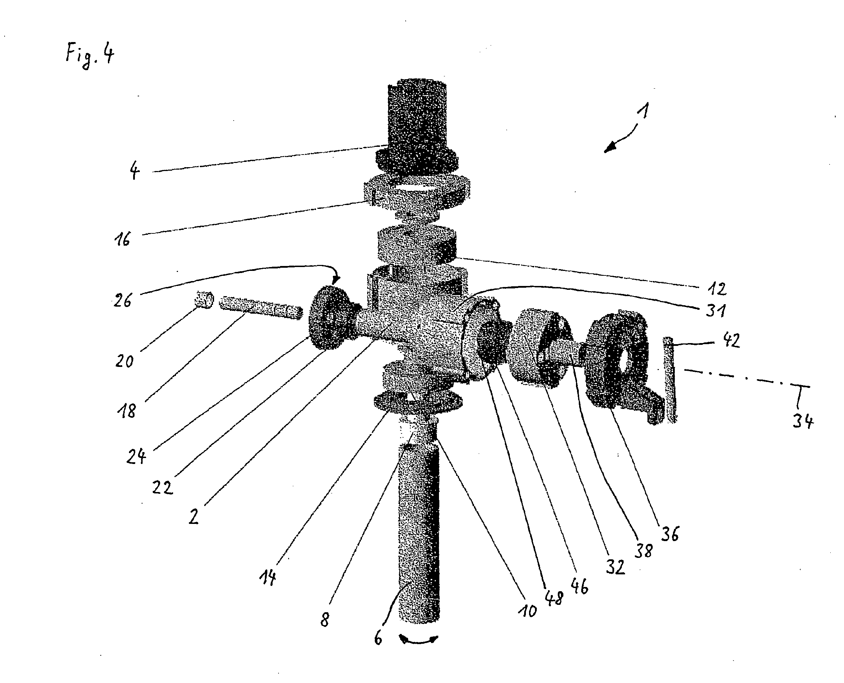

Fig. 3 und 4 zeigen im einzelnen den Aufbau der erfindungsgemäßen Brems- und Kupplungsanordnung 1. Ein Hubrohraufnahmebolzen 8 ist drehfest mit einem darauf aufgesetzten Schneckenrad 10 verbunden und über ein Kugellager 12 in dem Gehäuse 2 gelagert, welches durch einen Deckel 14 geschlossen ist. Der Gabelkopf 4 ist mittels eines Gabelkopfdeckels 16 fest mit dem Gehäuse 2 verschraubt. Eine Schnecke 18 ist mittels eines Gleitlagers 20 und eines Kugellagers 22 im Gehäuse 2 gelagert und steht mit dem Schneckenrad 10 in Eingriff. An einem Endabschnitt der Schnecke 18 ist ein erstes Bremselement 24 aufgesetzt und drehfest mit der Schnecke 18 verbunden. Das erste Bremselement 24 ist tellerförmig ausgebildet und weist auf einer äußeren Umfangsfläche eine äußere konische Reibfläche 26 und auf einer inneren Konusfläche eine innere konische Reibfläche 28 auf. Ein O-Ring 30 dient zur Abdichtung des Schneckengetriebes gegenüber Abrieb von den Reibflächen 26, 28.

In einem zylindrischen Bereich 31 des Gehäuses 2 ist ein zweites Bremselement 32 in Richtung einer Drehachse 34 der Schnecke 18 axial beweglich, aber drehfest hinsichtlich des Gehäuses 2 geführt. Dies kann bspw. durch eine zylindrische Ausbildung des zweiten Bremselements mit auf dem Umfang angeordneten keilnutenartigen Vorsprüngen erreicht werden, die in entsprechende Nuten in dem Bereich 31 greifen. Das zweite Bremselement 32 weist eine axiale, aus dem Gehäuse durch einen Deckel 36 geführte Verlängerung 38 auf, in der eine quer verlaufende Durchgangsöffnung 40 ausgebildet ist. Ein auf dem Deckel 36 schwenkbar gehaltener Betätigungshebel 42 greift durch die Durchgangsöffnung 40 und ermöglicht eine gesteuerte Bewegung des zweiten Bremselements 32 relativ zu dem ersten Bremselement 24. Das zweite Bremselement 32 weist an einer inneren Umfangsfläche eine konische Reibfläche 35 zum Zusammenwirken mit der äußeren Reibfläche 26 des ersten Bremselements 24 auf.

Eine nicht dargestellte erste Vorspannfeder (Schraubenfeder) ist zwischen dem Deckel 36 und dem zweiten Bremselement 32 angeordnet, so daß dieses in Richtung auf das erste Bremselement 24, d.h. in Fig. 3 nach links, vorgespannt ist.

Wie Fig. 3 weiter zeigt, ist in einer zylindrischen Ausnehmung 44 des zweiten Bremselements 32 ein topfförmiges Zusatzbremselement 46 aufgenommen, welches auf einer zu dem ersten Bremselement 24 weisenden konischen Außenseite eine konische Reibfläche 48 aufweist, die mit der inneren Reibfläche 28 des ersten Bremselements 24 zusammenwirkt. Das Zusatzbremselement 46 ist innerhalb der zylindrischen Ausnehmung 44 in Richtung der Drehachse 34 axial verschieblich relativ zu dem zweiten Bremselement 32 geführt und drehfest mit diesem verbunden, bspw. über eine Keilnutenführung. Außerdem ist das Zusatzbremselement 46 mittels einer nicht dargestellten, im Inneren der zylindrischen Ausnehmung 44 angeordneten Vorspannfeder (Schraubenfeder) in Richtung von dem zweiten Bremselement 32 weg und in Richtung auf das erste Bremselement 24 vorgespannt. Außerdem ist das Zusatzbremselement 46 axial nur begrenzt beweglich innerhalb der zylindrischen Ausnehmung 44 geführt, so daß es ab einer vorbestimmten axialen Verlagerung des zweiten Bremselements 32 aus der in Fig. 3 gezeigten Stellung nach rechts von diesem (nach rechts) mitgenommen wird, so daß ab der vorbestimmten Verlagerung des zweiten Bremselements 32 in Richtung auf den Deckel 36 weder das zweite Bremselement 32 noch das Zusatzbremselement 46 in reibschlüssigem Zusammenwirken mit dem ersten Bremselement 24 stehen.

Der Kegelwinkel der Reibflächen 26, 35 und 28, 48 sowie die Materialpaarung zwischen erstem und zweitem Bremselement und die Vorspannung der auf das zweite Bremselement 32 einwirkenden Druckfeder sind so gewählt, daß das daraus resultierende Reib- bzw.

Bremsmoment im Eingriffzustand gemäß Fig. 3 wesentlich größer ist als das maximale, durch das Untersetzungsgetriebe transformierte Antriebsmoment des Antriebs. In diesem Zustand kann daher mit Hilfe des Verstellantriebs problemlos eine Verstellung des zu verstellenden Teils vorgenommen werden.

Wird das zweite Bremselement 32 mit Hilfe des Betätigungshebels 42 axial gegen die anliegende Federkraft verschoben, so wird das Brems- bzw. Kupplungsmoment nahezu schlagartig aufgehoben. Da sich jedoch das Zusatzbremselement 46 seinerseits federbelastet innerhalb des zweiten Bremselements 32 befindet, besteht im Moment des Ausrückens zwischen zweitem und erstem Bremselement immer noch ein Reibmoment, das eine starke Bremsfunktion erzeugt. Je weiter das zweite Bremselement 32 mit Hilfe des Betätigungshebels 42 axial von dem ersten Bremselement 24 weg bzw. in Richtung auf den Deckel 36 verlagert wird, desto kleiner wird die Federvorspannung auf das Zusatzbremselement 46 aufgrund dessen zunehmender Verlagerung von dem zweiten Bremselement 32 weg, und somit wird auch die Bremswirkung auf den ausgerückten Antrieb kleiner. Ab einer bestimmten Verlagerung des zweiten Bremselements 32 wird das Zusatzbremselement 46 von diesem mitgenommen, wodurch sofort sämtliche extern eingeleitete Reibung entfällt. In diesem Fall bremst lediglich noch das rückwärts angetriebene Schneckengetriebe, dessen Bremswirkung durch entsprechende Vorgabe der Steigung bzw. des Übersetzungsverhältnisses eingestellt werden kann.

Im umgekehrten Fall ist es möglich, durch ein gesteuertes Loslassen des Betätigungshebels 42 immer mehr Reibung in das erste Bremselement 24 einzuleiten, bis zu dessen vollständiger Blockierung, und somit eine lineare Bewegung des Gabelkopfs 4 gesteuert zu verlangsamen oder zu stoppen.

### Bezugszeichenliste

- 1: Brems- und Kupplungsanordnung
- 2: Gehäuse
- 4: Gabelkopf (Übertragungselement)
- 6: Hubrohr
- 8: Hubrohraufnahmebolzen
- 10: Schneckenrad
- 12: Kugellager
- 14: Deckel
- 16: Gabelkopfdeckel
- 18: Schnecke
- 20: Gleitlager
- 22: Kugellager
- 24: erstes Bremselement
- 26: äußere konische Reibfläche
- 28: innere Reibfläche
- 30: O-Ring
- 31: zylindrischer Bereich (von 2)
- 32: zweites Bremselement
- 34: Drehachse (von 18)
- 35: konische Reibfläche (von 32)
- 36: Deckel
- 38: Verlängerung
- 40: Durchgangsöffnung
- 42: Betätigungshebel
- 44: zylindrische Ausnehmung
- 46: Zusatzbremselement
- 48: Reibfläche

## Patentansprüche

1. Brems- und Kupplungsanordnung (1) zum Herstellen entweder einer bremsmomentbehafteten oder drehfesten Verbindung zwischen einem rotierenden Element (6) und einem relativ zu diesem drehfest angeordneten Übertragungselement (4), wobei das rotierende Element (6) über ein Untersetzungsgetriebe (10, 18) mit einem ersten rotierenden Bremselement (24) in Antriebsverbindung steht, das mit einem drehfest angeordneten, zweiten Bremselement (32) in reib- und/oder formschlüssigen Eingriff bringbar ist, **dadurch gekennzeichnet, daß** das Untersetzungsgetriebe als Schneckengetriebe ausgebildet ist, wobei das rotierende Element (6) mit einem Schneckenrad (10) in Antriebsverbindung steht, mit dem eine in einem mit dem Übertragungselement (4) fest verbundenen Gehäuse (2) gelagerte Schnecke (18) in Eingriff steht, wobei das erste Bremselement (24) in Antriebsverbindung mit der Schnecke (18) steht.

2. Anordnung nach Anspruch 1, **dadurch gekennzeichnet, daß** das zweite Bremselement ausschließlich formschlüssig mit dem ersten Bremselement in Eingriff bringbar ist.

3. Anordnung nach Anspruch 2, **gekennzeichnet durch** eine zahnkupplungsartige Eingriffsverbindung.

4. Anordnung nach Anspruch 1, **dadurch gekennzeichnet, daß** das zweite Bremselement (32) ausschließlich reibschlüssig mit dem ersten Bremselement (24) in Eingriff bringbar ist.

5. Anordnung nach Anspruch 1 oder 4, **dadurch gekennzeichnet, daß** das zweite Bremselement (32) gesteuert reibschlüssig mit dem ersten Bremselement (24) in Eingriff bringbar ist, wobei eine Anpreßkraft zwischen erstem und zweitem Bremselement steuerbar ist.

6. Anordnung nach Anspruch 1, 4 oder 5, **dadurch gekennzeichnet, daß** das erste Bremselement (24) in Form eines Bremstellers mit einer Reibfläche (26) ausgebildet ist.

7. Anordnung nach Anspruch 6, **dadurch gekennzeichnet, daß** die Reibfläche (26) zumindest bereichsweise konusförmig ausgebildet ist.

8. Anordnung nach Anspruch 6 oder 7, **dadurch gekennzeichnet, daß** die Reibfläche zumindest bereichsweise eben ausgebildet ist.

9. Anordnung nach einem der vorangehenden Ansprüche, **dadurch gekennzeichnet, daß** das erste Bremselement (24) drehfest mit einem Ausgang des Untersetzungsgetriebes verbunden ist.

10. Anordnung nach einem der vorangehenden Ansprüche, **dadurch gekennzeichnet, daß** das erste Bremselement (24) drehfest mit der Schnecke (18) verbunden ist.

11. Anordnung nach einem der vorangehenden Ansprüche, **dadurch gekennzeichnet, daß** das zweite Bremselement (32) in Richtung einer Drehachse (34) der Schnecke (18) axial verschieblich und drehfest in dem Gehäuse (2) geführt ist.

12. Anordnung nach einem der Ansprüche 1, oder 4 bis 11, **dadurch gekennzeichnet, daß** das zweite Bremselement (32) in Form eines Bremstellers mit einer Reibfläche (35) ausgebildet ist.

13. Anordnung nach Anspruch 12, **dadurch gekennzeichnet, daß** die Reibfläche (35) zumindest bereichsweise konusförmig ausgebildet ist.

14. Anordnung nach Anspruch 12 oder 13, **dadurch gekennzeichnet, daß** die Reibfläche zumindest bereichsweise eben ausgebildet ist.

15. Anordnung nach einem der vorangehenden Ansprüche, **dadurch gekennzeichnet, daß** das zweite Bremselement (32) in Richtung auf das erste Bremselement (24) federbelastet ist.

16. Anordnung nach einem der Ansprüche 11 bis 14, **dadurch gekennzeichnet, daß** ein Zusatzbremselement (46) relativ zu dem zweiten Bremselement (32) axial beweglich geführt, drehfest damit verbunden und in Richtung auf das erste Bremselement (24) federbelastet ist.

17. Anordnung nach Anspruch 16, **dadurch gekennzeichnet, daß** das Zusatzbremselement (46) schwächer federbelastet ist als das zweite Bremselement (32).

18. Anordnung nach Anspruch 16 oder 17, **dadurch gekennzeichnet, daß** das Zusatzbremselement (46) axial begrenzt beweglich geführt ist, so daß es ab einer vorbestimmten axialen Verlagerung des zweiten Bremselements (32) von diesem mitgenommen wird.

19. Anordnung nach Anspruch 2 oder 3, **dadurch gekennzeichnet, daß** ein Zusatzbremselement relativ zu dem zweiten Bremselement verschieblich, drehfest damit verbunden und in Richtung auf das erste Bremselement federbelastet geführt ist.

20. Anordnung nach einem der vorangehenden Ansprüche, **dadurch gekennzeichnet, daß** das zweite Bremselement (32) über eine aus einem Gehäuse (2) nach außen geführte Betätigung (42) steuerbar ist.

21. Anordnung nach Anspruch 20, **dadurch gekennzeichnet, daß** das zweite Bremselement (32) eine axiale, aus dem Gehäuse (2) geführte Verlängerung (38) aufweist, mit der ein Betätigungshebel (42) zusammenwirkt.

22. Anordnung nach einem der vorangehenden Ansprüche, **dadurch gekennzeichnet, daß** das Übertragungselement (4) als Gabelkopf zur lösbaren Verbindung mit einem verstellbaren Gegenstand, insbesondere Möbelteil, ausgebildet ist.

23. Anordnung nach einem der vorangehenden Ansprüche, **dadurch gekennzeichnet, daß** das rotierende Element als rotierend antreibbares Rohr, insbesondere Hubrohr (6) eines Verstell- oder Möbelantriebs, ausgebildet ist.

24. Anordnung nach Anspruch 23, **dadurch gekennzeichnet, daß** das Hubrohr (6) mit einer Spindelmutter verbunden ist, die auf einer drehantreibbaren Gewindespindel sitzt.

25. Anordnung nach einem der vorangehenden Ansprüche, **dadurch gekennzeichnet, daß** das rotierende Element (6) in einem mit dem Übertragungselement (4) fest verbundenen Gehäuse (2) gelagert ist, wobei das Untersetzungsgetriebe (10, 18) und die Bremselemente (24, 32) in dem Gehäuse (2) angeordnet sind.

## Claims

1. Brake/clutch arrangement (1) for producing either a connection which is subjected to braking torque or a rotationally fixed connection between a rotating element (6) and a transmission element (4) which is arranged so as to be rotationally fixed with respect thereto, wherein the rotating element (6) is drive-connected by means of a step-down transmission (10, 18) to a first rotating brake element (24) which can be placed in force-fitting and/or form-fitting engagement with a second brake element (32) which is arranged so as to be rotationally fixed, **characterized in that** the step-down transmission is embodied as a worm gear pair, wherein the rotating element (6) is drive-connected to a worm gear (10), with which a worm (18), which is mounted in a housing (2) which is fixedly connected to the transmission element (4), engages, wherein the first brake element (24) is drive-connected to the worm (18).

2. Arrangement according to Claim 1, **characterized in that** the second brake element can be placed only in form-fitting engagement with the first brake element.

3. Arrangement according to Claim 2, **characterized by** a toothed-clutch-like engagement connection.

4. Arrangement according to Claim 1, **characterized in that** the second brake element (32) can be placed only in force-fitting engagement with the first brake element (24).

5. Arrangement according to Claim 1 or 4, **characterized in that** the second brake element (32) can be placed in force-fitting engagement with the first brake element (24) in a controlled fashion, with a pressing force between the first and the second brake element being controllable.

6. Arrangement according to Claim 1, 4 or 5, **characterized in that** the first brake element (24) is embodied in the form of a brake plate having a friction face (26).

7. Arrangement according to Claim 6, **characterized in that** the friction face (26) is conical at least in regions.

8. Arrangement according to Claim 6 or 7, **characterized in that** the friction face is planar at least in regions.

9. Arrangement according to one of the preceding claims, **characterized in that** the first brake element (24) is rotationally fixedly connected to an output of the step-down transmission.

10. Arrangement according to one of the preceding claims, **characterized in that** the first brake element (24) is rotationally fixedly connected to the worm (18).

11. Arrangement according to one of the preceding claims, **characterized in that** the second brake element (32) is axially displaceable in the direction of a rotational axis (34) of the worm (18) and is guided in a rotationally fixed manner in the housing (2).

12. Arrangement according to one of Claims 1, or 4 to 11, **characterized in that** the second brake element (32) is embodied in the form of a brake plate having a friction face (35).

13. Arrangement according to Claim 12, **characterized in that** the friction face (35) is conical at least in regions.

14. Arrangement according to Claim 12 or 13, **characterized in that** the friction face is planar at least in regions.

15. Arrangement according to one of the preceding claims, **characterized in that** the second brake element (32) is spring-loaded in the direction of the first brake element (24).

16. Arrangement according to one of Claims 11 to 14, **characterized in that** an auxiliary brake element (46) is guided so as to be axially moveable relative to the second brake element (32), is rotationally fixedly connected thereto and is spring-loaded in the direction of the first brake element (24).

17. Arrangement according to Claim 16, **characterized in that** the auxiliary brake element (46) is spring-loaded to a lesser degree than the second brake element (32).

18. Arrangement according to Claim 16 or 17, **characterized in that** the auxiliary brake element (46) is guided so as to be moveable in an axially delimited fashion, so that it is driven by the second brake element (32) beyond a predefined axial displacement of the latter.

19. Arrangement according to Claim 2 or 3, **characterized in that** an auxiliary brake element is guided so as to be displaceable relative to the second brake element, rotationally fixedly connected thereto and spring-loaded in the direction of the first brake element.

20. Arrangement according to one of the preceding claims, **characterized in that** the second brake element (32) can be controlled by means of an actuating lever (42) which is guided outwards out of the housing (2).

21. Arrangement according to Claim 20, **characterized in that** the second brake element (32) has an axial extension (38) which is guided out of the housing (2) and with which an actuating lever (42) interacts.

22. Arrangement according to one of the preceding claims, **characterized in that** the transmission element (4) is embodied as a fork head for forming a detachable connection to an adjustable item, in particular a furniture part.

23. Arrangement according to one of the preceding claims, **characterized in that** the rotating element is embodied as a tube which can be driven in rotation, in particular a lifting tube (6) of an adjustment drive or furniture drive.

24. Arrangement according to Claim 23, **characterized in that** the lifting tube (6) is connected to a spindle nut which is seated on a threaded spindle which can be driven in rotation.

25. Arrangement according to one of the preceding claims, **characterized in that** the rotating element (6) is mounted in a housing (2) which is fixedly connected to the transmission element (4), wherein the step-down transmission (10, 18) and the brake elements (24, 32) are arranged in the housing (2).

## Revendications

1. Dispositif de freinage et d'embrayage (1) pour l'établissement soit d'une liaison liée à un couple de freinage soit d'une liaison solidaire en rotation entre un élément (6) rotatif et un élément de transmission (4) disposé par rapport à cet élément de façon solidaire en rotation, l'élément (6) en rotation étant en liaison d'entraînement au moyen d'un engrenage de démultiplication (10, 18) avec un premier élément de freinage (24) rotatif, qui peut être amené en prise par frottement et/ou par complémentarité de forme avec un second élément de freinage (32) disposé de façon solidaire en rotation, **caractérisé en ce que** l'engrenage de démultiplication est conçu comme un engrenage à vis sans fin, l'élément (6) en rotation étant en liaison d'entraînement avec une roue à vis sans fin (10), avec laquelle une vis sans fin (18), logée dans un boîtier (2) relié de façon fixe à l'élément de transmission (4) est en prise, le premier élément de freinage (24) étant en liaison d'entraînement avec la vis sans fin (18).

2. Dispositif selon la revendication 1, **caractérisé en ce que** le second élément de freinage est en prise exclusivement par complémentarité de forme avec le premier élément de freinage.

3. Dispositif selon la revendication 2, **caractérisé par** une liaison d'entraînement en forme d'accouplement denté.

4. Dispositif selon la revendication 1, **caractérisé en ce que** le second élément de freinage (32) peut être amené en prise exclusivement par frottement avec le premier élément de freinage (24).

5. Dispositif selon la revendication 1 ou 4, **caractérisé en ce que** le second élément de freinage (32) peut être amené en prise avec le premier élément de freinage (24) avec un frottement commandé, une pression d'appui entre le premier et le second éléments de freinage pouvant être commandée.

6. Dispositif selon la revendication 1, 4 ou 5, **caractérisé en ce que** le premier élément de freinage (24) est conçu sous la forme d'un disque de frein avec une surface de frottement (26).

7. Dispositif selon la revendication 6, **caractérisé en ce que** la surface de frottement (26) est conçue en forme de cône au moins par endroits.

8. Dispositif selon la revendication 6 ou 7, **caractérisé en ce que** la surface de frottement est conçue plane au moins par endroits.

9. Dispositif selon l'une quelconque des revendications précédentes, **caractérisé en ce que** le premier élément de freinage (24) est relié de façon solidaire en rotation à une sortie de l'engrenage de démultiplication.

10. Dispositif selon l'une quelconque des revendications précédentes, **caractérisé en ce que** le premier élément de freinage (24) est relié de façon solidaire en rotation à la vis sans fin (18).

11. Dispositif selon l'une quelconque des revendications précédentes, **caractérisé en ce que** le second élément de freinage (32) peut être déplacé axialement en direction d'un axe de rotation (34) de la vis sans fin (18) et est guidé de façon solidaire en rotation dans le boîtier (2).

12. Dispositif selon l'une quelconque des revendications 1, ou 4 à 11, **caractérisé en ce que** le second élément de freinage (32) est conçu sous la forme d'un disque de frein avec une surface de frottement (35).

13. Dispositif selon la revendication 12, **caractérisé en ce que** la surface de frottement (35) est conçue en forme de cône au moins par endroits.

14. Dispositif selon la revendication 12 ou 13, **caractérisé en ce que** la surface de frottement est conçue plane au moins par endroits.

15. Dispositif selon l'une quelconque des revendications précédentes, **caractérisé en ce que** le second élément de freinage (32) est sollicité par ressort en direction du premier élément de freinage (24).

16. Dispositif selon l'une quelconque des revendications 11 à 14, **caractérisé en ce qu'**un élément de freinage supplémentaire (46) est guidé de façon mobile axialement par rapport au second élément de freinage (32), est relié de façon solidaire en rotation avec celui-ci et est sollicité par ressort en direction du premier élément de freinage (24).

17. Dispositif selon la revendication 16, **caractérisé en ce que** l'élément de freinage supplémentaire (36) est sollicité par ressort de façon plus faible que le second élément de freinage (32).

18. Dispositif selon la revendication 16 ou 17, **caractérisé en ce que** l'élément de freinage supplémentaire (46) est conçu de façon mobile et limitée axialement, de sorte qu'il est entraîné à partir d'un déplacement axial prédéfini du second élément de freinage (32) par celui-ci.

19. Dispositif selon la revendication 2 ou 3, **caractérisé en ce qu'**un élément de freinage supplémentaire est coulissant par rapport au second élément de freinage, est relié de façon solidaire en rotation à celui-ci et est sollicité par ressort en direction du premier élément de freinage.

20. Dispositif selon l'une quelconque des revendications précédentes, **caractérisé en ce que** le second élément de freinage (32) peut être commandé au moyen d'un actionnement (42) guidé vers l'extérieur à partir d'un boîtier (2).

21. Dispositif selon la revendication 20, **caractérisé en ce que** le second élément de freinage (32) présente un prolongement (38) axial guidé à la sortie du boîtier (2), avec lequel un levier d'actionnement (42) coopère.

22. Dispositif selon l'une quelconque des revendications précédentes, **caractérisé en ce que** l'élément de transmission (4) est conçu comme une tête de fourche pour l'assemblage amovible avec un objet déplaçable, en particulier une partie de meuble.

23. Dispositif selon l'une quelconque des revendications précédentes, **caractérisé en ce que** l'élément rotatif est conçu comme un tuyau pouvant être entraîné en rotation, en particulier un tube de levage (6) d'un entraînement de déplacement ou de meuble.

24. Dispositif selon la revendication 23, **caractérisé en ce que** le tube de levage (6) est relié à un écrou de broche, qui est logé sur une broche filetée pouvant être entraînée en rotation.

25. Dispositif selon l'une quelconque des revendications précédentes, **caractérisé en ce que** l'élément (6) rotatif est logé dans un boîtier (2), relié de façon fixe à l'élément de transmission (4), l'engrenage de démultiplication (10, 18) et les éléments de freinage (24, 32) étant disposés dans le boîtier (2).
